# EUROPEAN PATENT APPLICATION

(11) **EP 2 219 323 A1**
(43) Date of publication of application: **18.08.2010**
(21) Application number: 10153665.4
(22) Date of filing: 16.02.2010
(51) Int. Cl.: H04L 12/26, H04W 24/08

(54) **Real-time network data analysing system**

(30) Priority: 16.02.2009 FI 20095143
(71) Applicant: NetHawk Oyj, 90570 Oulu (FI)
(72) Inventor: Ainali, Timo, FI-90650 Oulu (FI); Ikäheimo, Jorma, FI-90550, Oulu (FI); Tallgren, Tommi, FI-90800, Oulu (FI); Axelsson, Jorma, FI-90460, Oulunsalo (FI)
(74) Representative: Määttä, Jukka Tapani

(57) **Abstract**

An arrangement and method for analysing the data transferred in communications networks. The fact that though the amount of user plane traffic and data is increasing fast, the amount of signaling traffic is hardly increasing at all, is utilised. In the present system the analysis of the user plane and the control plane is done separately in user plane analysis appliance (206) and protocol analyser (204). The separate analysis results are then combined by certain criteria and the combined data is shown. An at least nearly real-time network data analysis is possible also in the networks with high speed traffic.

## Description

The invention relates to a system for analysing the data transferred in the networks, especially the ones provided with packet radio characteristics for the mobile terminals. The aim is to monitor the traffic in a network, measure the network capability and also debug transfer failures in the network. The system comprises both a method and an arrangement to implement the method.

The data transfer rate in the mobile communications networks has risen, and likewise the amount of the user data to be transferred has increased strongly. This means that tracking and analysing the data transferred in the networks, or network data, has become more demanding. So-called protocol analysers are used to this end. Publication US 2008/0037435 discloses an example of such a protocol analyser. It sniffs network data and debugs transfer failures in the communications networks. The analyser utilizes both internal events of a communication device and signalling messages transferred in a communications network. The internal events and external signaling messages are combined, or correlated for speeding up the debugging.

However, the capability of the known analysers, like the one mentioned above, is inadequete to handle high speed traffic, because all data is decoded from down layer to top. One solution is to use filters which limit the amount of data taken into analysis. However, filtering makes complete analysis impossible, because only part of network data is analysed, thus for instance the user plane can not be analysed at all. Another way of getting around the limitation is to capture all of the network data and then analyse traffic in post processing. However, the post process can not handle all of the data, because the time needed for analysis is longer than the duration of the analysed traffic, so only a part of the traffic can be analysed.

The 'user plane' relates to the data, the transfer of which from/to a user equipment through network(s) is ultimately in question. The 'control plane' relates to the signaling, by which the connections in the networks are established, supervised and terminated.

The object of the invention is to implement the network data analysis in a new way, which alleviates the flaws associated with the prior art. The invention utilises the fact that though the amount of user plane traffic and data is increasing fast, the amount of signaling traffic is hardly increasing at all. On the contrary, the newest standards try to reduce the signaling traffic in order to shorten the time needed for establishing and terminating the sessions. In the system according to the invention the analysis of the user plane traffic and data and the analysis of the control plane traffic and data are done separately. The separate analysis results are then combined by certain criteria and the combined data is shown.

An advantage of the invention is that it makes possible at least nearly a real-time network data analysis also in the networks with high speed traffic.

The invention is described below in detail. Reference will be made to the accompanying drawings where
- Fig. 1: presents the functional structure of the system according to the invention,
- Fig. 2: presents generally the arrangement according to the invention and an example of using it,
- Fig. 3: presents an example of the capturing unit,
- Fig. 4: presents an example of the user plane analysis appliance,
- Fig. 5: presents an example of the protocol analyser,
- Fig. 6: presents an example of the flow monitoring application and
- Fig. 7: presents an example of the QoS measuring application.

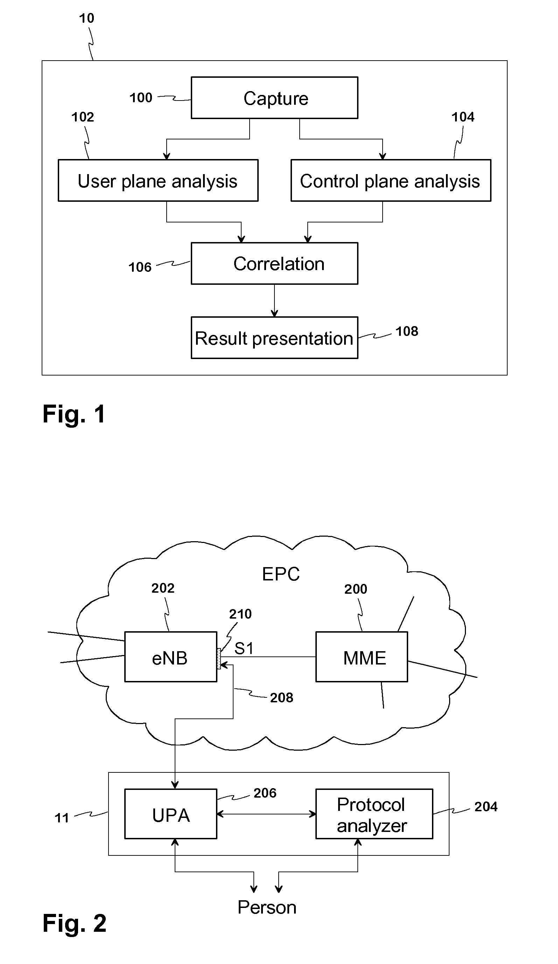

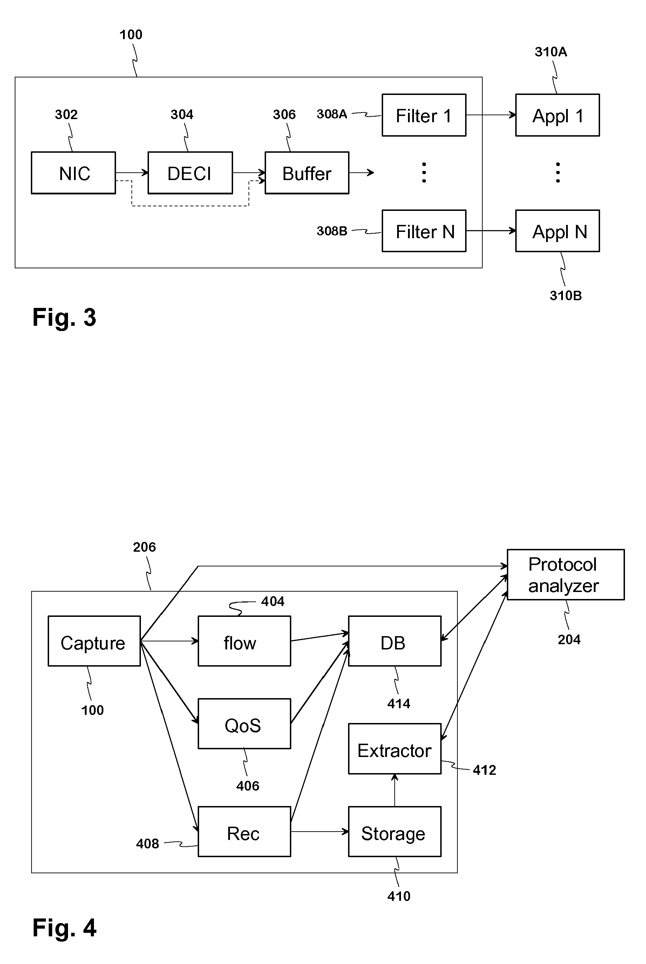

**Fig. 1** illustrates the functional structure of the system according to the invention. The analysing system 10 comprises the functional units capture 100, user plane protocol analysis 102, control plane protocol analysis 104, correlation 106 and result presentation 108. The capturing unit 100 catches data packets from a transmission path of a network, timestamps the packets and delivers them to the protocol analysis. Capturing function is described below (Fig. 3). The protocol analysis is divided to two parts for the reason that the amount of signaling traffic is a lot smaller than the amount of user plane traffic. One part is the user plane protocol analysis 102, user plane analysis in short, and the other part is the control plane protocol analysis 104, the control plane analysis in short. In the user plane analysis i.a. the binding information in the packets carrying user data is located and stored with other analysis results. In the control plane analysis i.a. the messages used for setting up the bearers are read and the binding information is collected and stored among other call and session information.

The control plane analysis 104 requires only moderate processing power so that it can be performed with usual protocol analysers like NetHawk M5. Modifying such a protocol analyser to act as a part of analysing arrangement is a relatively straightforward task.

The user plane analysis 102 requires performance optimized detailed protocol analysis applications. Nowadays this kind of applications are found for example in IP (Internet Protocol) network flow monitors, which, combined with a special high performance network interface card, can analyse traffic with gigabit transmission rates. Utilizing this technique in the user plane analysis 102 and correlating the results with the results of control plane analysis 104 done by a protocol analyser gives an opportunity to reuse the known protocol analysers in analysis of high speed transmission networks.

In the correlation the combining of the results of control plane analysis and user plane analysis takes place in accordance with the binding information collected and stored to the analysis results.

The result presentation 108 means showing the results of both the user plane and control plane analysis bound together. In the result presentation the control plane analysis results such as calls and sessions are bound with the user plane analysis results such as QoS measurements and user plane flows. The result presentation makes it easy to locate a specific call and session, and then locate the related user plane analysis results for example to study the QoS features of the call. Compared with the prior art protocol analysers, the performance is better. The correlation can be done nearly in real time and therefore results can be obtained at once. On the other hand, results can also be utilized in post processing. This means e.g. solving the troubles in user connection after a user has complained to the network operator about those troubles.

**Fig. 2** shows generally the arrangement according to the invention and an example of using it. The analysing arrangement 11 comprises a UPA, or user plane analysis appliance 206, and a protocol analyser 204, which have a two-directional connection with each other. The arrangement 11 has a connection 208 from the UPA to a network in the S1 interface 210 of a 3GPP LTE-node eNB 202. The eNB has a connection to a node 200 (MME) in the core network EPC through the interface S1. The traffic is then monitored in this interface.

The UPA 206 performs user plane analysis and stores some or all of the traffic to the capture files. The user plane analysis means for instance the QoS and flow analysis for the protocols of different layers. In case of said S1 the link layer protocol is high speed Ethernet. The network layer protocol is IP and transport layer protocol SCTP or UDP. All the protocols related to S1 are specified in 3GPP TS 36.414 and 3GPP TS 36.413. Among others the transmission protocol GTP of the general packet radio service and the protocols above it are specified. The connection 208 can be implemented by a network tap or pass through Ethernet capture port in UPA 206. A monitoring port of a switch can also be used. The UPA is for instance a rack mount Linux PC. It has a user interface for the monitoring person(s).

The protocol analyser 204 is for the control plane analysis. It is implemented e.g. by a rack mount Windows PC. Protocol analyser 204 is connected to UPA 206 for instance via a gigabit LAN, and acts also as an interface outwards to the monitoring persons.

The analysing arrangement 11 can be connected to more than one network interface depending on monitoring needs. For instance, when the delay in an EPC is studied, the interface connecting the EPC to the Internet can be connected to the analysing arrangement.

**Fig. 3** depicts an example of the capturing unit 100. NIC 302 is used to capture data packets from the monitored network. Special high performance network interface cards are available from multiple vendors. NIC 302 is connected to telecommunication network passively, either using a pass through connection or a network tap. NIC 302 timestamps data and transfers it to the buffer 306. In case the transmission is encrypted and decryption is needed, there will be a decryption unit DECI 304 ahead of the buffer, the decryption being e.g. IPSec/AES. The decryption is advantageously done by using a co-processor designed for this aim. The buffer 306 is connected to one of filters 308A, 308B, which filter the packets to be delivered to the packet processing applications 310A, 310B. There is a different filter for each application. The number of the filters and applications varies, it can rise e.g. to ten. There are examples of the applications in Fig. 4. Filters can be set for example by using Berkley Packet Filter rules, for which there are ready implementations. The applications 310A, 310B and the capturing unit 100 can be distributed by using for instance RPCAP interface between them, thus making possible the packet processing application in a separate PC. In this case a LAN connection is required between them.

Zero copy principle can be utilized in processing the captured packets to reduce overhead caused by the copying of the captured packets. NIC 302 takes care of storing the packets to shared memory buffers, all of the post processing being done by using the shared memory buffers. After all applications have processed the captured packets, the shared memory buffers are released for reuse. In case the application performs a time-intensive process for captured packets, it makes its own copy of the packets rather than reserves the buffer for a long period of time.

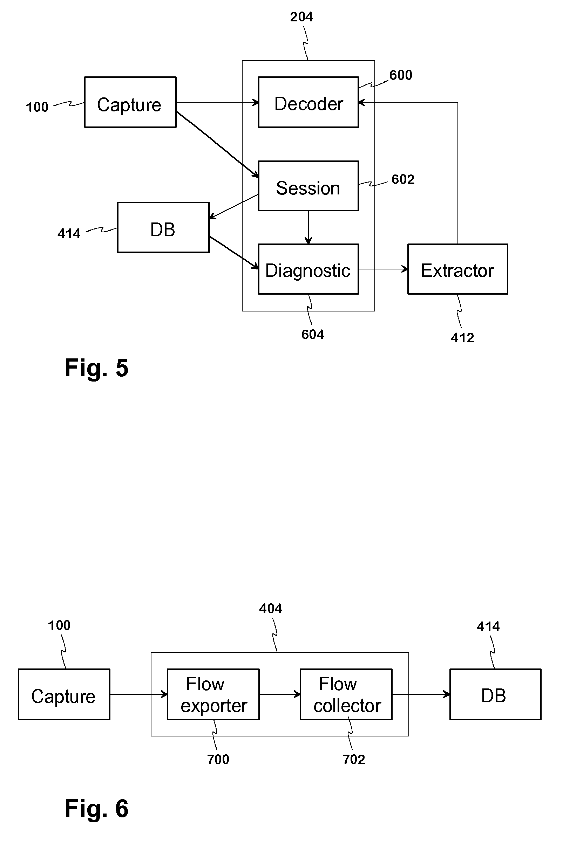

**Fig. 4** shows an example of the user plane analysis appliance 206. The user plane data is analysed with specialized applications, which are here the flow monitoring application 404, the QoS measuring application 406 and the recording application 408. Each application stores the results of its process to the database 414. The results are tagged with binding information that is localized from the data to be analysed. For instance in case of the S1 interface, the GTP TEID and mobile IP address are used to tag analysing results, representing then the binding information. The flow monitoring application 404 is used to inspect and report data flow in the network, which is described in more detail in Fig. 6. The QoS measuring application 406 is used to determine QoS parameters like throughput, jitter and delay. Depending on the filters set for the applications 404, 406, these can be used to analyse for instance only user plane traffic or both user plane and control plane traffic.

The recording application 408 is used to store the captured packets to the storage 410. Preferably a RAID configured to RAID 0 striped disks for maximum write performance is used for recording. The recorded capture files are used by a packet extractor 412. The extractor reads from the storage the data packets needed for further debugging function in the protocol analyser 204. The extraction takes place on grounds of the timestamps or contents of some fields as IP source/destination address or TCP/UDP/SCTP port.

The system can easily be scaled according to the performance requirements, e.g. the database 414 can run in a separate server. In that case there could be multiple user plane analysis appliances 206, one database server and one protocol analyser 204. The flow monitoring application and QoS measuring application can also be distributed between different appliances depending on performance requirements.

**Fig. 5** depicts an example of the protocol analyser. The protocol analyser 204 implements the control plane analysis and partly the user data analysis. In addition, it makes the correlation between the user and control plane data. The protocol analyser comprises a session analysis unit 602, a decoder 600 and a diagnostic unit 604.

The protocol analyser receives captured packets e.g. via a remote interface like RPCAP from the capturing unit 100. It sets a filter, which limits packets to control plane packets only. In case of 3GPP LTE S1 interface, the filter is set to pass all IP frames where protocol field is SCTP, protocol number 132. In the session analysis unit 602 the signaling is inspected, call and session detail records are formed and stored to the database 414. In addition, a call view is shown on the screen. The session analysis makes it possible to correlate the user plane data and control plane data, because these data are bound to each other, and the binding can be found from the signaling. In case of the GTP tunneling, the binding is done by the GTP TEID and mobile IP address, which are found in the session analysis from the session setup signalling and stored to the database 414 among other call information. The GTP TEID and mobile IP address can be found by following the S1 AP (application protocol). Other session details, as mobile identities, can be found from NAS messages. The session analysis can then proceed e.g. as follows: When an S1 AP message 'INITIAL CONTEXT SETUP REQUEST' is received from the network, MME UE S1 AP identifier and eNB UE S1 AP identifier are read to form a new session record, and used to identify the session later on. The GTP TEID and the network layer address, or mobile IP address, are stored to session record for each bearer to be set up, or established. Then the session record is stored to the database. During the session lifetime, new session records updating the state of the session like changes in the GTP TEID/mobile IP address are written to the database.

The decoder 600 converts the packets to a human readable form and provides a window, which shows the converted packets.

The monitoring person can for instance select a session from the call and session view on the screen of the protocol analyzer and open the session for the diagnosis. The diagnostic unit 604 reads the results of the user plane analysis, as flow and QoS data, and the results of the control plane analysis, as the call and session information from the database 414. These results are tagged e.g. by the GTP TEID and mobile IP address stored to a session record in the database. Based on such binding information the diagnostic unit makes the correlation between the results of the user plane and control plane analysis and visualizes the correlation results in the user interface using tables and graphs. For instance a session throughput graph is shown. Thus the diagnostic unit 604 provides the result presentation 108 seen in Fig. 1.

In case a detailed decoding is needed, the captured packets related to a specified session are extracted from the storage 410 by using the extractor 412 and shown in detailed decoding window. The protocol analyser can for example open a certain time frame of a capture file in a detailed window. This window shows the decoded messages to implement drill down function.

It is possible to utilize the information stored in the database 414 to view correlation results like calls, QoS, KPI and network flows in a post processing and offline analysis. Because all the incoming data can be recorded to the storage 410, the offline analysis can drill down message level.

**Fig. 6** shows an example of the flow monitoring application. The flow monitoring application 404 is implemented according to the commonly known IPFIX architecture and comprises a flow exporter 700 and flow collector 702. The flow exporter 700 inspects the captured packets and collects flow information such as the flow start time, flow finish time, IP source address, IP destination address, transport protocol, number of packets, number of octets, TCP flags, TOS. The flow exporter collects the same information also from the user plane flows transported on top of tunneling protocol like GTP. In case of GTP, at least the GTP TEID, IP source address and IP destination address are collected among other mobile IP details. The flow exporter 700 sends the collected information from time to time to the flow collector 702, which stores the flow records to the database 414. To reduce the amount of the collected data, the collecting information from tunneling IP layer can be skipped.

The control plane signaling can be inspected and details from it collected and stored to the database. In that case i.a. the GTP TEID, mobile phone's IP address, IMSI, IMEI are recorded and stored to call details.

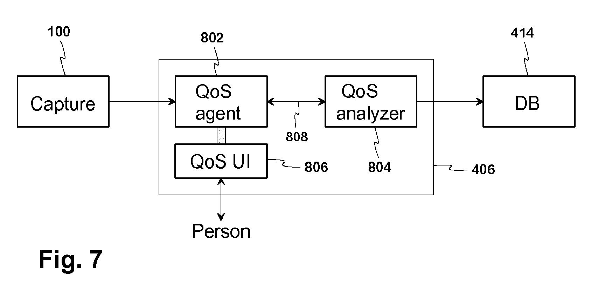

**Fig. 7** depicts an example of the QoS measuring application 406. This comprises a QoS agent 802, QoS analyser 804 and QoS user interface 806. The QoS agent 802 collects packet/time stamp info and performs QoS measurements. Among others the delay in a network and its throughput are measured and the signal jitter is calculated. The QoS agent 802 makes the measurements on grounds of the commands, which come through the QoS user interface 806 and are based on the external control from a monitoring person. The commands include addresses for data collecting, such as IP source/destination addresses, TCP/UDP ports and GTP TEIDs, the measuring targets and measurement start/stop controls. Measurements in all can be done in all layers: in case of S1 are traced the packets made by protocols UDP, IP and Ethernet below GTP and 'tunneled' protocols AP, TCP or UDP and IP above GTP, GTP itself included. The QoS agent 802 returns periodically the measurement results and collected packet/time stamp information to the QoS analyser 804. The interface 808 between the QoS agent and analyser is preferably a TCP/IP socket.

There can be several QoS agents 802 connected to one QoS analyser 804, in which case the QoS analyser can calculate correlation results for instance for delay and packet drops between the nodes, to which the agents are connected. The QoS agents can be in the same PC as the QoS analyser or they can be separated, in which case a LAN connection is required therebetween. The QoS analyser stores the results to the database 414.

The system for analysing the data transferred in communications networks has been described above. Its implementation can in details vary from that presented. The inventive idea can be applied in different ways within the scope defined by the independent claims 1 and 3.

## Claims

1. An arrangement for analysing data transferred in communications networks, the arrangement (11) comprising a data capturing unit (100) with data filters and means to implement an analysis of a user plane data and control plane data and to correlate the user plane data and control plane data for monitoring captured data, **characterized in that**
- the means to implement the analysis of the user plane data comprise a user plane analysis appliance (206) with at least a flow monitoring application (404), a recording application (408) and a database (414) to store the analysis results
- the means to implement the analysis of the control plane data and correlation between the user plane data and control plane data comprise a protocol analyser (204) with a decoder (600), session analysis unit (602) and diagnostic unit (604), the protocol analyser being connected to the data capturing unit (100) and database (414) and
- the user plane analysis appliance (206) further comprises a disk storage (410) to record captured data packets and an extractor (412) connected to said protocol analyzer to read certain data packets from the storage for drill down function in the protocol analyzer.

2. An arrangement according to claim 1, **characterized in that** the user plane analysis appliance (206) further includes a QoS monitoring application (406), which comprises at least one QoS agent (802) connected to said capturing unit for quality of service measurements, a QoS user interface (806) for providing the QoS agent(s) with measuring commands coming from external control and a QoS analyser (804) connected to said database (414) for processing measurement results and storing processing results to the database.

3. A method for analysing data transferred in communications networks, the method comprising steps for
- capturing (100) data packets from a communications network and storing them
- analysing (102, 104) a user plane data and control plane data
- correlating (106) the user plane data and control plane data using a binding information between them and
- presenting (108) the results of correlation, **characterized in that**
- the user plane data and control plane data are analysed separately
- said binding information is found from the data packets during analysis and comprises protocol parameters shared between the user plane data and control plane data
- storing the captured data packets is implemented by recording them on a disk and
- parts of the recorded data are extracted for debugging and drill down is implemented in the control plane analysis using the extracted data.

4. A method according to claim 3, **characterized in that** the user plane analysis further comprises
- inspecting the captured packets and collecting data flow information from headers of IP, UDP and GTP frames and
- measuring and calculating parametres of the quality of service such as delay in a network, throughput of a network and jitter in signals.

5. A method according to claim 3, **characterized in that** the control plane analysis comprises a session analysis for each call, wherein the signaling of the call is inspected and a session detail record is formed and stored.

6. A method according to claim 3, when measurements are made in an S1 interface, **characterized in that** said protocol parameters belonging to the binding information are GTP tunnel endpoint identifier and mobile IP address.

7. A method according to claim 3, **characterized in that** for correlating the user plane and control plane data the binding information and other results of the user plane analysis and control plane analysis are read, and results of the correlation are visualized.

8. A method according to claim 3, **characterized in that** data are extracted from the disk storage on grounds of timestamps and address information.

9. A method according to claim 8, **characterized in that** said address information for extraction is found in one or more of following packet headers: GTP header, TCP/UDP header, IP header.

10. A program product for analysing network data, **characterized in that** it comprises computer program code means, which are arranged to implement the steps defined in claim 3, when said program is executed in a computer.
Abbreviations
3GPP 3rd Generation Partnership Project
AES Advanced Encryption Standard
AP Application Protocol
DB Database
DECI Decryption unit
eNB e Node B (Node of LTE network)
EPC Evolved Packet Core
GGSN Gateway GPRS Support Node
GPRS General Packet Radio Service
GTP GPRS Transmission Protocol
IMEI International Mobile Equipment Identity
IMSI International Mobile Subscriber Identity
IP Internet Protocol
IPFIX IP Flow Information Export
KPI Key Performance Indicator
LAN Local Area Network
LTE Long Term Evolution
MME Mobility Management Entity
NAS Non Access Stratum
NIC Network Interface Card
QoS Quality of Service
RAID Redundant Array of Independent Disk
RPCAP Remote Packet Capture
SCTP Stream Control Transmission Protocol
SGSN GPRS Support Node
TCP Transmission Control Protocol
TEID Tunnel Endpoint Identifier
TOS Type of Service
UE User Equipment
UI User Interface
UDP User Datagram Protocol
UPA User Plane analysis Appliance
